# EUROPEAN PATENT SPECIFICATION

(11) **EP 3 686 445 B1**
(45) Date of publication and mention of the grant of the patent: **30.10.2024**
(21) Application number: 19216249.3
(22) Date of filing: 13.12.2019
(51) Int. Cl.: F16B 25/00, F16B 25/10

(54) **CONCRETE SCREW**
BETONSCHRAUBE
VIS POUR BÉTON

(30) Priority: 24.01.2019 TW 108102680
(43) Date of publication of application: 29.07.2020
(73) Proprietor: Hsu, Kuo-Tai, Tainan City 710 (TW); Hsu, Ming-Hao, Tainan City 710 (TW)
(72) Inventor: HSU, KUO-TAI, 710 Tainan City (TW)
(74) Representative: Jannig & Repkow Patentanwälte PartG mbB

(56) References cited:
- CN-A- 107 420 403
- DE-A1- 102005 039 744
- DE-C3- 3 420 863
- US-A1- 2013 039 720
- US-A1- 2013 336 744
- US-A1- 2018 266 467
- US-B2- 9 695 859

## Description

### BACKGROUND OF THE INVENTION

### 1. Field of the Invention

The present invention relates to a screw and, more particularly, to a concrete screw adapted to be driven into a concrete or masonry structure.

### 2. Description of the Related Art

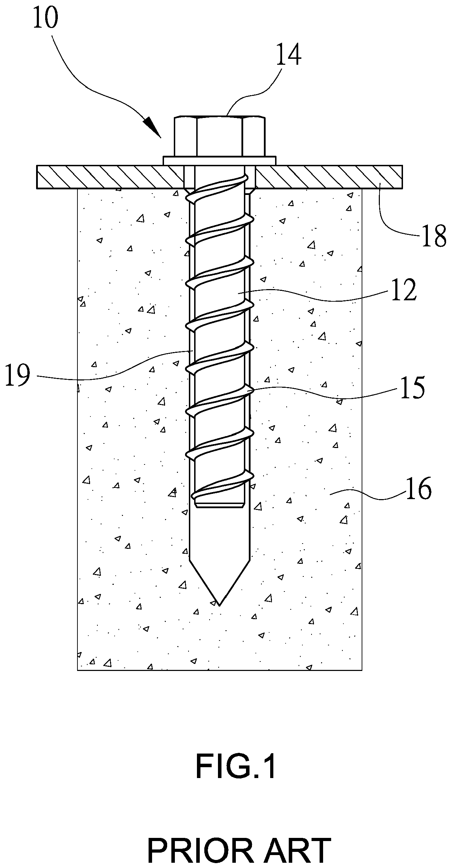

FIG 1 illustrates a traditional concrete screw 10 including a shank 12, a head 14 formed at an end of the shank 12, and a thread 15 formed on the shank 12. The screw 10 is adapted to be fastened into a concrete structure 16 at the masonry (e.g., brick masonry) and/or concrete to join another structure component 18 on the concrete structure 16. Before driving the screw 10, a worker uses an electric drill (not shown in FIG 1) to drill a hole 19 in the concrete structure 16. The hole 19 has a hole diameter slightly greater than the shank diameter of the shank 12 but less than the major diameter of the thread 15. Then, with the front end of the shank 12 inserted into the hole 19, the head 14 is driven to rotate by a tool (not shown) such that the hole wall of the hole 19 is cut by the thread 15, and hence the shank 12 can be screwed into the hole 19 until the head 14 gets close to or abuts the structure component 18. However, during the process of the shank 12 driven into the hole 19, plenty of concrete debris coming out of stiffened cement mortars (which are not compressed in contrast to rigid wooden fibers) in the concrete structure 16 cut by the thread 15 worsens the cutting force of the thread 15, retards movement of the shank 12 inside the hole 19, decelerates the screw 10 and even breaks the shank 12. Moreover, the shank 12 driven into the hole 19 in the beginning may be shaken or even deviated.

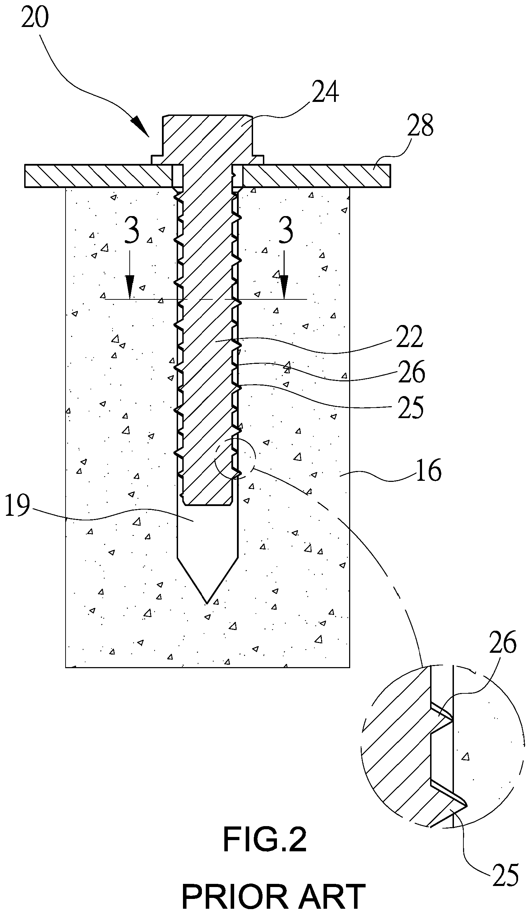

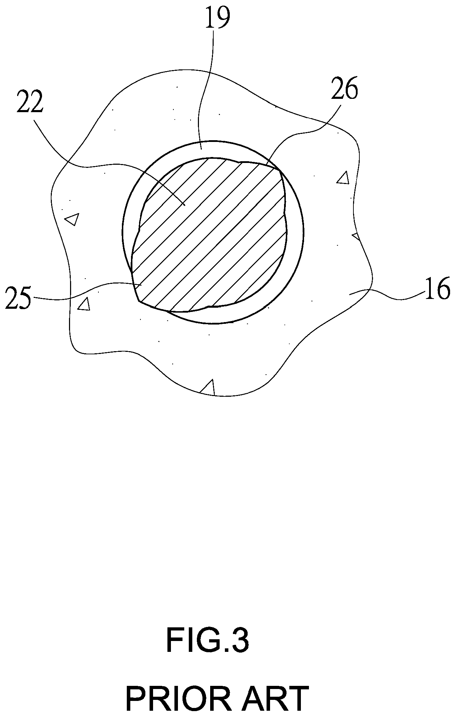

FIGS. 2 and 3 illustrates another traditional concrete screw 20 including a shank 22, a head 24 formed at an end of the shank 22, and first and second threads 25 and 26 formed on the shank 22. The screw 20 is adapted to be fastened into a concrete structure 16 on which another structure component 28 is fixed. The second thread 26 features its major diameter less than the major diameter of the first thread 25 and almost equal to the hole diameter of the hole 19. When the shank 22 is driven into the hole 19, the second thread 26, which bears against the inner surface of the hole 19 and supports cutting, accelerates the screw 20 moving inside the hole 19. However, concrete debris neither crushed nor dispersed fast by the second thread 26 imposes immense frictional resistances on the shank 22 at the time when sunk in the hole 19 deeply. Accordingly, the shank 22 fails in complete fastening, so that a greater screwing torque must be applied to overcome the resistances and hence probably break the shank 22 off. Moreover, the screw-in process of the shank 22 driven into the concrete structure 16 in the beginning cannot be stabilized by the added second thread 26. Because there is only one contact point between the hole wall and the second thread 26 on any cross section of the shank 22, the shank 22 newly driven into the concrete structure 16 is still shaken such that the screw 20 tends to deviate from the drive direction. In addition, since the second thread 26 has auxiliary function to aid cutting but the debris cut off by the first thread 25 cannot be dispersed efficiently by the settlement of the second thread 26 and will keep accumulating between the threads and the hole wall, the hole wall inside the hole 19 on retrieval of the screw 20 is damaged by interactive frictions between the first and second threads 25, 26 and concrete debris directly or indirectly and fails to support pull-out strength through which the screw 20 is driven into the hole 19 again.

Documents US2013/039720, CN107420403, DE102005039744, US9695859, US2018/266467, and US2013/336744 are documents reflecting the relevant background art, wherein US 2013/039720 describes a screw having a cutting thread with a plurality of spiral cutting edges so as to increase the cutting effect. These documents do, however, not provide a satisfactory solution of the above mentioned problems.

### BRIEF SUMMARY OF THE INVENTION

Thus, an objective of the present invention is to provide a concrete screw according to claim 1 which is able to efficiently crush concrete debris and evenly disperse concrete debris around a shank of the concrete screw for accelerative movement of the concrete screw which is driven into a concrete structure, kept unshaken in the beginning, not deviated from a drive direction, and fastened stably and robustly.

To achieve this and other objectives, a screw of the present invention is adapted to be driven into a hole with a hole diameter in a concrete structure. The screw, according to claim 1, includes a head, a shank extending from the head and defining a longitudinal axis, a thread, and a plurality of oblique ribs. The shank includes a front segment and a rear segment spaced from the front segment along the longitudinal axis and located between the front segment and the head. The shank has a shank diameter less than the hole diameter of the hole. The front segment includes a front end having a flat end face. The thread is spirally formed on the shank and extends to the rear segment from the front segment. The thread includes a plurality of thread convolutions and has a major diameter greater than the hole diameter. At least three oblique ribs are formed on an outer periphery of the shank and located between any two adjacent thread convolutions of the thread at the rear segment and the front segment of the shank. The at least three oblique ribs are spaced around the shank circumferentially such that the front segment and the rear section of the shank respectively have at least three oblique ribs at cross-section. Each oblique rib has a trapezoid cross section with two lateral sides and a planar top face interconnecting the two lateral sides, and the planar top faces of the plurality of oblique ribs define the rib top diameter. The planar top faces of the at least three oblique ribs defines a rib top diameter less than the major diameter of the thread convolutions and slightly less than or equal to the hole diameter. The plurality of oblique ribs can quickly crush and disperse concrete debris which comes out of a hole wall of the hole cut by the thread when the concrete screw is driven into the hole.

In a form, each oblique rib spirally extends along the longitudinal axis.

In a preferred form, three oblique ribs are designed between two adjacent thread convolutions at the front segment of the shank and spaced 120 degrees apart around the shank circumferentially, such that the front section of the shank has the three oblique ribs at cross-section.

In a preferred form, a plurality of notches is designed in the thread convolutions at the front segment of the shank for development of a plurality of teeth on the thread at the front segment.

The present invention will become clearer in light of the following detailed description of illustrative embodiments of this invention described in connection with the drawings.

### DESCRIPTION OF THE DRAWINGS

The illustrative embodiment may best be described by reference to the accompanying drawings where:
FIG 1 is a schematic view for a traditional concrete screw driven into a concrete structure.
FIG 2 is a schematic view for another traditional concrete screw driven into a concrete structure.
FIG 3 is a sectional view taken along line 3-3 of FIG 2.
FIG 4 is a perspective view of a concrete screw according to a first embodiment not belonging to the present invention.
FIG 5 is a sectional view taken along line 5-5 of FIG 4.
FIG 6 is a schematic view which illustrates the concrete screw in FIG 4 driven into a concrete structure in the beginning.
FIG 7 is a sectional view taken along line 7-7 of FIG 6.
FIG 8 is a schematic view which illustrates the concrete screw in FIG 6 totally fastened into the concrete structure.
FIG 9 is a plan view of a concrete screw according to a second embodiment not belonging to the present invention.
FIG 10 is a perspective view of a concrete screw according to a third embodiment not belonging to the present invention.
FIG 11 is a sectional view taken along line 11-11 of FIG 10.
FIG 12 is a perspective view of a concrete screw according to an embodiment of the present invention.

### DETAILED DESCRIPTION OF THE INVENTION

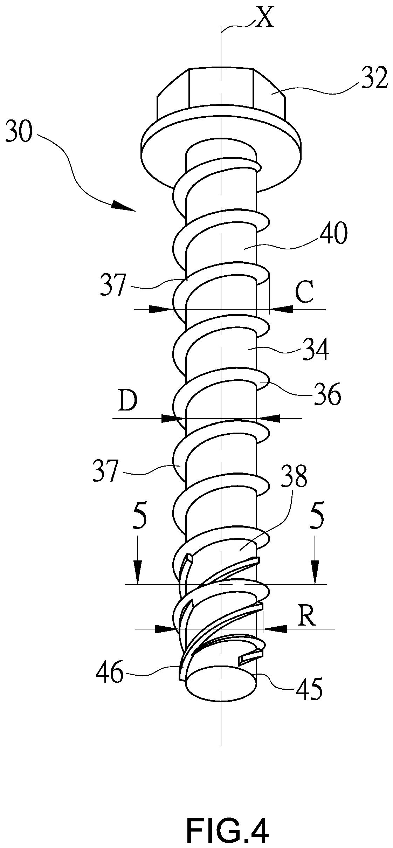

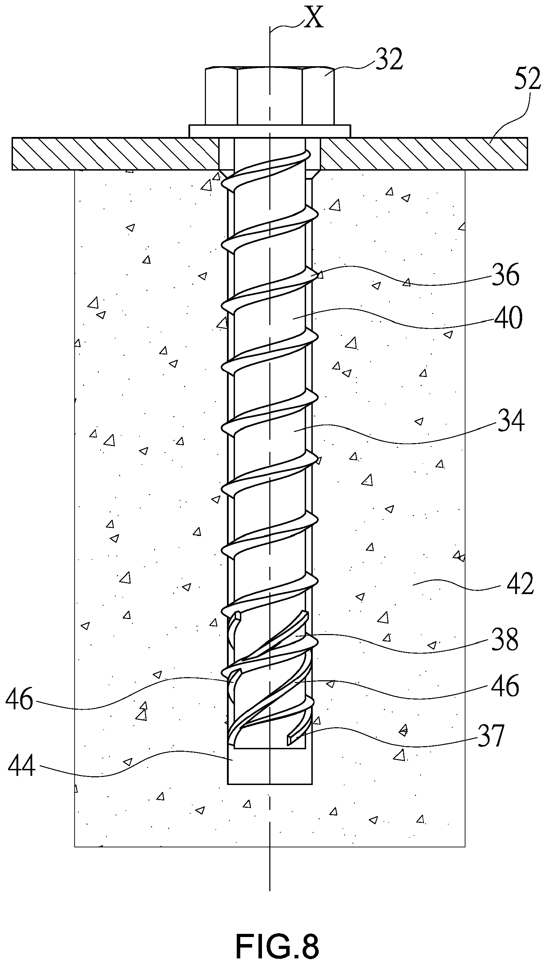

A concrete screw 30 according to a first embodiment is shown in FIGS. 4 through 8 of the drawings and generally includes a head 32, a shank 34 extending from the head 32, and a thread 36 formed on the shank 34. The shank 34 defining a longitudinal axis X includes a front segment 38 and a rear segment 40 spaced from the front segment 38 along the longitudinal axis X. The rear segment 40 is located between the front segment 38 and the head 32. The shank 34 has a shank diameter D. The front segment 38 and the rear segment 40 may have an identical shank diameter or distinct shank diameters, respectively. The head 32 is used to provide a torque tool (not shown in figures) in combination to apply rotational torque such that the shank 34 can be screwed inside a concrete structure 42.

In general, a hole 44 should be drilled inside the concrete structure 42 with an electric drill (not shown in figures) first for accommodating the shank 34 of the screw 30. The hole 44 has a hole diameter H which is greater than the shank diameter D of the shank 34. The thread 36 is spirally formed on an outer periphery of the shank 34 and extends from the front segment 38 toward the head 32. In this embodiment, the thread 36 extends to the rear segment 40 from a front end 45 of the front segment 38. The thread 36 includes a plurality of thread convolutions 37 and has a major diameter C that is greater than both the shank diameter D and the hole diameter H.

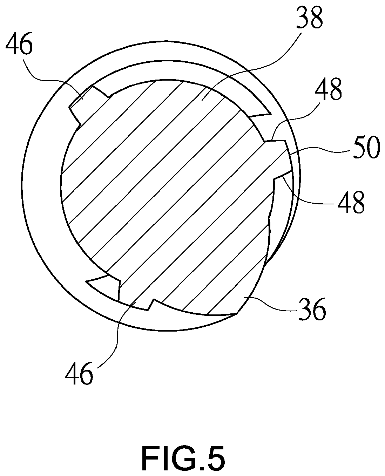

The screw 30 further includes a plurality of oblique ribs 46 formed on the outer periphery of the shank 34 and spaced around the shank 34 circumferentially. Each oblique rib 46 is located between two adjacent thread convolutions 37 of the thread 36 and spirally extends along the longitudinal axis X. In this embodiment, the front segment 38 of the shank 34 is provided with the plurality of oblique ribs 46 with any two oblique ribs 46 parallel to and spaced from each other. Alternatively, the rear segment 40 of the shank 34 is also provided with a plurality of oblique ribs 46. In this embodiment, three oblique ribs 46 are provided between any two adjacent thread convolutions 37 of the thread 36 at the front segment 38 and spaced 120 degrees apart around the shank 34 circumferentially. Accordingly, there are three oblique ribs 46 at any cross section in the front segment 38 of the shank 34, and each oblique rib 46 has a trapezoid cross section with two lateral sides 48 and a planar top face 50 (see FIG 5). The plurality of oblique ribs 46 have rib tops through which a rib top diameter R is defined. The rib top diameter R is less than the major diameter C and slightly less than or equal to the hole diameter H, that is, not greater than the hole diameter H of the hole 44. Furthermore, an upward extending direction of each oblique rib 46 is similar to an upward direction of the thread 36 extending toward the head 32 (upwardly and slantingly to the upper right). In this embodiment, an inclined angle formed by each oblique rib 46 extending toward the head 32 relative to a horizontal axis perpendicular to the longitudinal axis X is greater than that of the thread 36 extending toward the head 32.

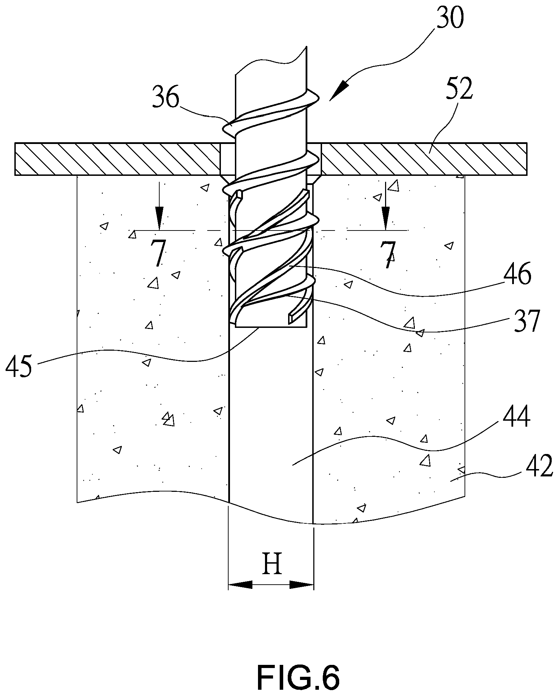

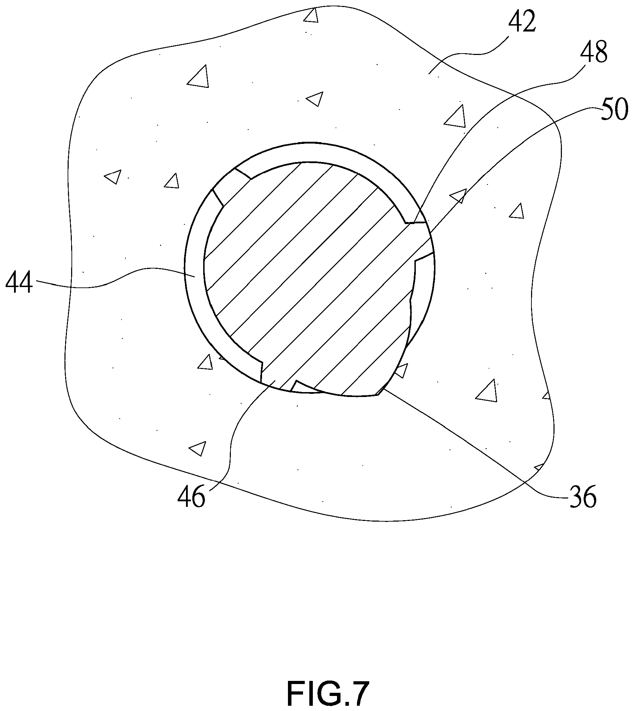

In practice, the front end 45 of the shank 34 is inserted into the hole 44 in the concrete structure 42 as shown in FIG 6. The major diameter of the thread convolutions 37 at the front end 45 is slightly less than the major diameter C of the thread convolutions 37 at the rear segment 40 for a modest torsion applied on the screw 30 in the beginning. Then, the head 32 is driven to rotate by a torque tool (not shown in figures), and the shank 34 is smoothly screwed into the concrete structure 42 when concrete debris coming out of the hole wall of the hole 44 cut by the thread 36 is crushed by the oblique ribs 46 and dispersed around the shank 34 evenly. The oblique ribs 46 act as the stirrer and grinder that distribute the debris on the shank 34 and even mill the debris into smaller pieces. This will mitigate the friction resistance in the whole screw-in process. Therefore, a structure component 52 can be fixed on the concrete structure 42. Because the separate oblique ribs 46 circumferentially arranged on the shank 34 form the rib top diameter R slightly less than or equal to the hole diameter H of the hole 44, there should be three contact planes formed between the hole wall and the three oblique ribs 46 at any cross section of the front segment 38 of the shank 34 which is being driven into the hole 44 in the beginning (see FIG 7). Accordingly, the shank 34 driven into the concrete structure 42 is kept unshaken at first and not deviated inside the concrete structure 42 deeply.

The screw 30 of the present invention offers benefits over the concrete screw 20 in FIG. 2 as follows:
1. Concrete debris is neither crushed nor dispersed by the second thread 26 of the screw 20 quickly. Comparatively, concrete debris is effectively crushed by the oblique ribs 46 and dispersed around the shank 34 being driven into the concrete structure 42 because of the oblique ribs 46 arranged at the front segment 38 and between two adjacent thread convolutions 37. Furthermore, the screw 30 is driven into the hole 44 fast with lesser friction applied on the shank 34 which is being moved inside the hole 44.
2. The lengthwise movement of the screw 20 along the hole wall is not contingent on the second thread 26 of the screw 20. Instead, the lengthwise movement of the screw 30 along the hole wall is effectively corrected by the oblique ribs 46 which keeps the screw 30 driven inside the hole 44 straight and aligned in the beginning and supports the screw 30 to be fastened stably and robustly.
3. The second thread 26 on the screw 20 is used to assist cutting. Thus, the pull-out strength of the screw 20 which was incorrectly fastened and retrieved but is driven into the hole again is weakened because an internal thread carved on the hole wall is damaged by concrete debris. Of the present invention, the oblique ribs 46 perform well in crushing and dispersing concrete debris evenly and correcting a path of the shank 34 moved inside a hole with neither the concrete structure 42 improperly cut nor the hole wall of the hole 44 damaged. Accordingly, even after the screw 30 is withdrawn from the hole 44, the retrieved screw 30 can be repeatedly screwed into the hole 44 to fasten again, maintaining proper pull-out strength.

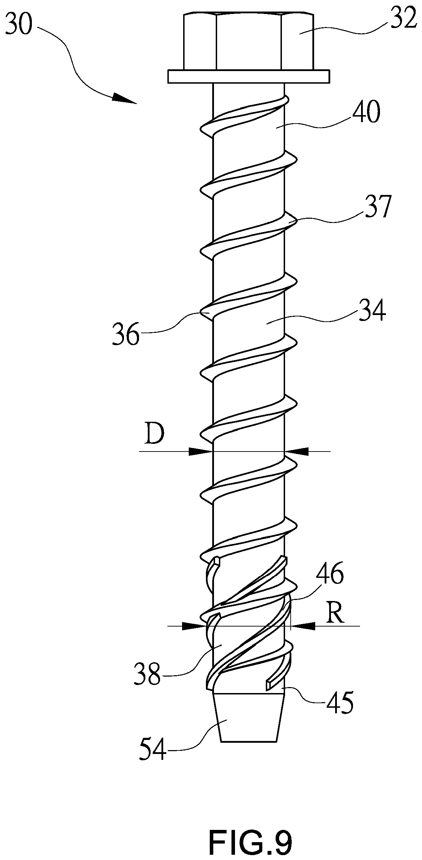

FIG 9 illustrates the screw 30 in a second embodiment. In this embodiment, a taper portion 54 extends from the front end 45 of the front segment 38, so that the front segment 38 of the shank 34 can be aligned with the hole 44 smoothly.

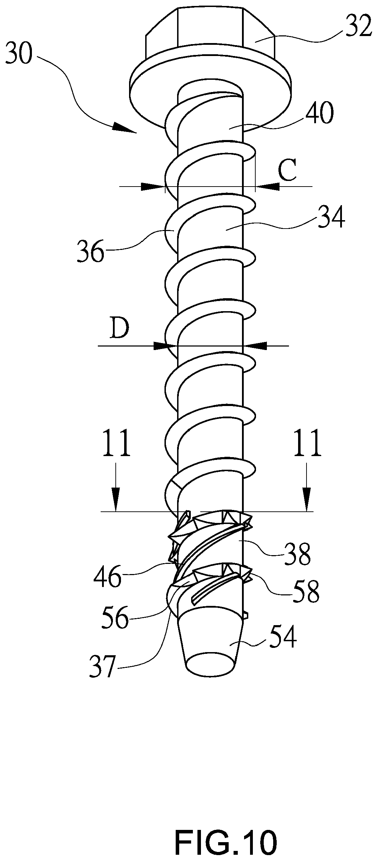

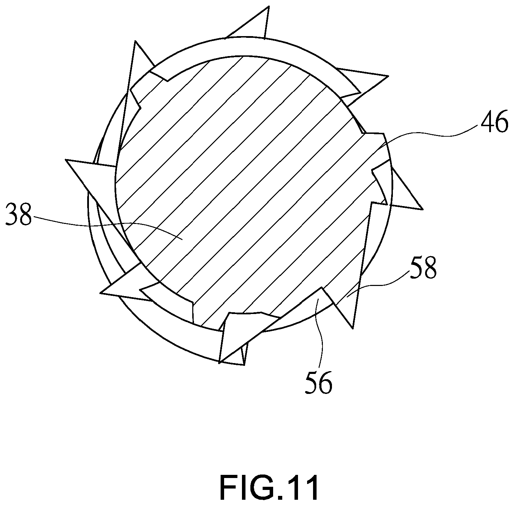

FIGS. 10 and 11 illustrate the screw 30 in a third embodiment. In this embodiment, a plurality of notches 56 is designed in the thread convolutions 37 at the front segment 38 for development of a plurality of teeth 58 on the thread 36 at the front segment 38. When the front segment 38 is driven into the hole 44 in the beginning, the teeth 58 support the plurality of oblique ribs 46 to expel concrete debris which is accommodated in the notches 56 for less friction on the shank 34 but higher speed of the screw 30 moved inside the concrete structure 42.

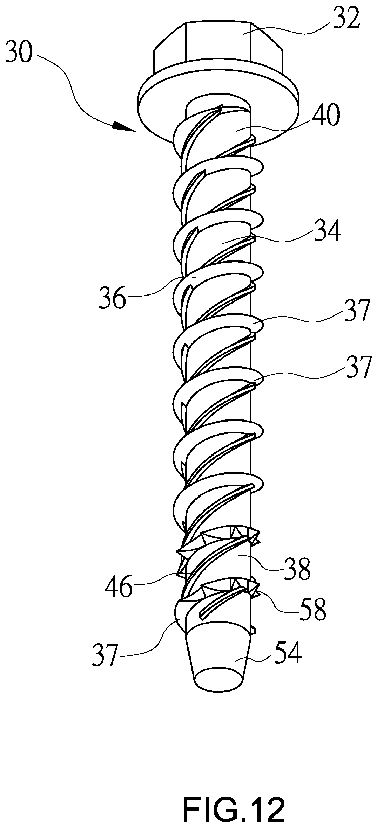

FIG 12 illustrates the screw 30 in an embodiment of the present invention. In this embodiment, the plurality of oblique ribs 46 provided on the shank 34 extends from the front segment 38 to the rear segment 40, so that at least three separate oblique ribs 46 are designed between any two adjacent thread convolutions 37 at the rear segment 40 of the shank 34 for crushing more concrete debris effectively.

The scope of the invention is to be indicated by the appended claims, rather than by the foregoing description.

## Claims

1. A screw (30) adapted to be driven into a pre-drilled hole (44) having a hole diameter (H) in a concrete structure (42), with the screw (30) comprising:
a head (32);
a shank (34) extending from the head (32) and defining a longitudinal axis (X), with the shank (34) including a front segment (38) and a rear segment (40) spaced from the front segment (38) along the longitudinal axis (X) and located between the front segment (38) and the head (32), with the shank (34) having a shank diameter (D) less than the hole diameter (H) of the hole (44), with the front segment (38) including a front end (45) having a flat end face; and
a thread (36) spirally formed on the shank (34) and extending to the rear segment (40) from the front segment (38) toward the head (32), with the thread (36) including a plurality of thread convolutions (37) and having a major diameter (C) greater than the hole diameter (H);
wherein at least three oblique ribs (46) are formed on an outer periphery of the shank (34) and located between any two adjacent thread convolutions (37) of the thread (36) at the rear segment (40) and also at the front segment (38) of the shank (34), wherein the at least three oblique ribs (46) are spaced around the shank 34 circumferentially such that the front segment (38) and the rear section (40) of the shank (34) respectively have at least three oblique ribs (46) at cross-section, wherein each oblique rib (46) has a trapezoid cross section with two lateral sides (48) and a planar top face (50) interconnecting the two lateral sides (48), with the planar top faces (50) of the at least three oblique ribs (46) defining a rib top diameter (R) less than the major diameter (C) of the thread convolutions (37) and slightly less than or equal to the hole diameter (H), wherein the at least oblique ribs (46) can crush and disperse concrete debris which comes out of a hole wall of the pre-drilled hole (44) cut by the thread (36) when the screw (30) is driven into the pre-drilled hole (44).

2. The screw (30) as claimed in claim 1, wherein each oblique rib (46) spirally extends along the longitudinal axis (X).

3. The screw (30) as claimed in claim 2, wherein three oblique ribs (46) are designed between any two adjacent thread convolutions (37) of the thread (36) at the front segment (38) of the shank (34) and spaced 120 degrees apart around the shank (34) circumferentially, such that the front section (38) of the shank (34) has the three oblique ribs (46) at cross-section.

4. The screw (30) as claimed in claim 1, wherein a plurality of notches (56) is designed in the thread convolutions (37) of the thread (36) at the front segment (38) for development of a plurality of teeth (58) on the thread (36) at the front segment (38).

5. The screw (30) as claimed in claim 1, wherein an upward extending direction of each oblique rib (46) is similar to an upward direction of the thread (36) extending toward the head (32).

## Patentansprüche

1. Schraube (30), die zum Eindrehen in ein vorgebohrtes Loch (44) mit einem Lochdurchmesser (H) in einer Betonkonstruktion (42) ausgelegt ist, wobei die Schraube (30) umfasst:
einen Kopf (32);
einen Schaft (34), der sich vom Kopf (32) erstreckt und eine Längsachse (X) definiert, wobei der Schaft (34) ein vorderes Segment (38) und ein hinteres Segment (40) umfasst, die von dem vorderen Segment (38) entlang der Längsachse (X) beabstandet und zwischen dem vorderen Segment (38) und dem Kopf (32) angeordnet sind, wobei der Schaft (34) einen Schaftdurchmesser (D) aufweist, der kleiner als der Lochdurchmesser (H) des Lochs (44) ist, wobei das vordere Segment (38) ein Vorderende (45) mit einer ebenen Endfläche aufweist; und
ein Gewinde (36), das spiralförmig auf dem Schaft (34) ausgebildet ist und sich vom vorderen Segment (38) zum hinteren Segment (40) in Richtung des Kopfes (32) erstreckt, wobei das Gewinde (36) mehrere Gewindewindungen (37) enthält und einen Außendurchmesser (C) aufweist, der größer als der Lochdurchmesser (H) ist;
wobei mindestens drei schräge Rippen (46) auf einer Außenumfangsfläche des Schafts (34) ausgebildet und zwischen jeweils zwei benachbarten Gewindewindungen (37) des Gewindes (36) am hinteren Segment (40) und auch am vorderen Segment (38) des Schafts (34) angeordnet sind, wobei die mindestens drei schrägen Rippen (46) in Umfangsrichtung um den Schaft (34) herum so beabstandet sind, dass das vordere Segment (38) und der hintere Abschnitt (40) des Schafts (34) im Querschnitt jeweils mindestens drei schräge Rippen (46) aufweisen, wobei jede schräge Rippe (46) einen trapezförmigen Querschnitt mit zwei Seitenflächen (48) und einer ebenen Oberseite (50) aufweist, die die beiden Seitenflächen (48) verbindet, wobei die ebenen Oberseiten (50) der mindestens drei schrägen Rippen (46) einen oberen Rippendurchmesser (R) definieren, der kleiner als der Außendurchmesser (C) der Gewindewindungen (37) und geringfügig kleiner oder gleich dem Lochdurchmesser (H) ist, wobei die mindestens schrägen Rippen (46) Betonrückstände, die aus einer Lochwand des vorgebohrten Lochs (44) austreten und durch das Gewinde (36) geschnitten werden, wenn die Schraube (30) in das vorgebohrte Loch (44) eingedreht wird, zerkleinern und verteilen können.

2. Schraube (30) nach Anspruch 1, wobei sich jede schräge Rippe (46) spiralförmig entlang der Längsachse (X) erstreckt.

3. Schraube (30) nach Anspruch 2, wobei drei schräge Rippen (46) zwischen jeweils zwei benachbarten Gewindewindungen (37) des Gewindes (36) am vorderen Segment (38) des Schafts (34) ausgebildet und in Umfangsrichtung um den Schaft (34) herum um 120 Grad voneinander beabstandet sind, sodass der vordere Abschnitt (38) des Schafts (34) im Querschnitt die drei schrägen Rippen (46) aufweist.

4. Schraube (30) nach Anspruch 1, wobei eine Vielzahl von Kerben (56) in den Gewindewindungen (37) des Gewindes (36) am vorderen Segment (38) zur Entwicklung einer Vielzahl von Zähnen (58) am Gewinde (36) des vorderen Segments (38) ausgebildet ist.

5. Schraube (30) nach Anspruch 1, wobei eine nach oben gerichtete Erstreckungsrichtung jeder schrägen Rippe (46) ähnlich einer nach oben gerichteten Richtung des sich zum Kopf (32) hin erstreckenden Gewindes (36) ist.

## Revendications

1. Vis (30) adaptée pour être enfoncée dans un trou pré-percé (44) ayant un diamètre de trou (H) dans une structure en béton (42), la vis (30) comprenant :
une tête (32) ;
une tige (34) s'étendant depuis la tête (32) et définissant un axe longitudinal (X), la tige (34) incluant un segment avant (38) et un segment arrière (40) espacé du segment avant (38) le long de l'axe longitudinal (X) et situé entre le segment avant (38) et la tête (32), la tige (34) ayant un diamètre de tige (D) inférieur au diamètre de trou (H) du trou (44), le segment avant (38) incluant une extrémité avant (45) ayant une face d'extrémité plate ; et
un filet (36) formé en spirale sur la tige (34) et s'étendant jusqu'au segment arrière (40) depuis le segment avant (38) vers la tête (32), le filet (36) incluant une pluralité de convolutions de filet (37) et ayant un diamètre extérieur (C) supérieur au diamètre de trou (H) ;
dans laquelle au moins trois nervures obliques (46) sont formées sur une périphérie externe de la tige (34) et situées entre deux quelconques convolutions de filet adjacentes (37) du filet (36) sur le segment arrière (40) et également sur le segment avant (38) de la tige (34), dans laquelle les au moins trois nervures obliques (46) sont espacées autour de la tige (34) circonférentiellement de manière telle que le segment avant (38) et la section arrière (40) de la tige (34) ont respectivement au moins trois nervures obliques (46) en section transversale, dans laquelle chaque nervure oblique (46) a une section transversale trapézoïdale avec deux côtés latéraux (48) et une face supérieure plane (50) reliant les deux côtés latéraux (48), les faces supérieures planes (50) des au moins trois nervures obliques (46) définissant un diamètre supérieur de nervure (R) inférieur au diamètre extérieur (C) des convolutions de filet (37) et légèrement inférieur ou égal au diamètre de trou (H), dans laquelle les au moins nervures obliques (46) peuvent écraser et disperser des débris de béton qui sortent d'une paroi de trou du trou pré-percé (44), coupée par le filet (36) lorsque la vis (30) est enfoncée dans le trou pré-percé (44).

2. Vis (30) selon la revendication 1, dans laquelle chaque nervure oblique (46) s'étend en spirale le long de l'axe longitudinal (X).

3. Vis (30) selon la revendication 2, dans laquelle trois nervures obliques (46) sont conçues entre deux quelconques convolutions de filet adjacentes (37) du filet (36) sur le segment avant (38) de la tige (34), et espacées les unes des autres de 120 degrés autour de la tige (34) circonférentiellement, de manière telle que la section avant (38) de la tige (34) a les trois nervures obliques (46) en section transversale.

4. Vis (30) selon la revendication 1, dans laquelle une pluralité d'entailles (56) est conçue dans les convolutions de filet (37) du filet (36) sur le segment avant (38) pour le développement d'une pluralité de dents (58) sur le filet (36) sur le segment avant (38).

5. Vis (30) selon la revendication 1, dans laquelle une direction s'étendant de façon ascendante de chaque nervure oblique (46) est similaire à une direction ascendante du filet (36) s'étendant vers la tête (32).
